Europäisches Patentamt

European Patent Office

Office européen des brevets

(11) Veröffentlichungsnummer: **0 476 541 A2**

(12) **EUROPÄISCHE PATENTANMELDUNG**

(21) Anmeldenummer: **91115572.9**

(22) Anmeldetag: **13.09.91**

(51) Int. Cl.5: **C04B 35/00**

(30) Priorität: **18.09.90 DE 4029558**

(43) Veröffentlichungstag der Anmeldung:
**25.03.92 Patentblatt 92/13**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**
(84) **BE CH DE DK ES FR GB GR IT LI LU NL SE**

(71) Anmelder: **SIEMENS MATSUSHITA COMPONENTS OHG**
**Siemensstrasse 43**
**A-8530 Deutschlandsberg(AT)**
(84) **AT**

(72) Erfinder: **Schuster, Hans-Georg, Dr. Dipl.-Ing.**
**Dr. Robert-Graf-Strasse 42**
**A-8010 Graz(AT)**
Erfinder: **Dermond, Eduard Peter, Dr. Mag.**
**Hohenrainstrasse 14**
**A-8042 Graz(AT)**

(54) **Verfahren zum Herstellen von elektrischen keramischen Bauelementen aus hochdisperser, mittels Copräzipitation aufbereiteter Keramikmasse.**

(57) Es werden zunächst alle einzelnen als Rohstoffe benötigten Massekomponenten im gewünschten Mengen- und Mischungsverhältnis in eine wässrige Lösung gebracht und dort durch Umrühren homogen dispergiert. Anschließend werden alle gelösten Massekomponenten durch chemische Reaktion mit Laugen oder Laugenbildern gemeinsam als homogenes Mischhydroxid mit einer durchschnittlichen Korngröße unter 0,3 μm ausgefällt (copräzipiert), und danach wird der ausgefällte Feststoff einer Nachwaschung und einer Trocknung unterzogen und anschließend nach üblichen Verfahren weiterverarbeitet, insbesondere calziniert, mit Bindemittel dispergiert, geformt, gesintert und schließlich mit Metallbelegungen versehen.

Die Erfindung betrifft ein Verfahren zum Herstellen von elektrischen keramischen Bauelementen aus hochdisperser, mittels Copräzipitation aufbereiteter Keramikmasse.

Elektrische Bauelemente im Sinne dieser Erfindung sind z.B. Thermistoren, Varistoren, Kondensatoren, keramische Resonatoren und ähnliche Bauelemente. Als Rohstoffe für ihre Herstellung werden typischerweise Metalloxide in Pulverform verwendet. Der Herstellungsprozeß der polykristallinen Keramik umfaßt dabei stets die drei Hauptstufen Pulveraufbereitung, Formgebung und Sinterung. Nach gründlicher Vermischung definierter Mengen der Ausgangsstoffe wird jedoch die Keramikmasse häufig noch vor der Formgebung bei hoher Temperatur zur Reaktion gebracht (Vorbrand, Umsatz). Daran schließt sich eine Feinmahlung an, die z. B. durch eine mechanische Kugelmühle erfolgen und viele Stunden dauern kann. Diese Feinmahlung ist für die Reaktivität des Pulvers bei der späteren Sinterung und damit für die Ausbildung des Keramikgefüges von Bedeutung. Das gewonnene Pulver kann daraufhin unter Zusatz eines Plastifizierungsmittels zu der gewünschten Form verpreßt, oder im Strangzieh- oder Foliengießverfahren weiterverarbeitet werden.

Die elektrischen Eigenschaften eines fertigen Bauelementes sind keineswegs bereits durch die chemische Zusammensetzung des Formkörpers festgelegt, sondern das keramische Material gewinnt seine endgültigen Eigenschaften erst im Sinterprozeß. Die elektrischen Eigenschaften von Thermistor- und Varistorkeramik werden überwiegend durch Sperrschichten an den Korngrenzen bestimmt. Für die Ausbildung des Keramikgefüges ist die jeweils höchste Temperatur, die das Sintergut erreicht, sowie die Einwirkungsdauer, die Aufheiz- und Abkühlgeschwindigkeit wesentlich. Die Formkörper verdichten sich beim Sinterprozeß und es entsteht eine gegenüber dem Ausgangszustand völlig neue polykristalline Gefügeordnung, die möglichst homogen sein soll.

Die Aufbereitung der Keramikmasse erfolgt bisher üblicherweise durch die innige Vermischung fester Pulver auf mechanischem Wege. Diese Methode ist zwar einfach handhabbar, bringt jedoch eine Reihe von Problemen mit sich:

Der mikrostrukturelle Aufbau der gesinterten Keramik ist grundsätzlich stark von der Partikelform und der Korngrößenverteilung der Rohstoffe abhängig. Deshalb können gegebenenfalls Rohstoffe gleichen Reinheitsgrades wegen ihrer unterschiedlichen Partikelbeschaffenheit zu unterschiedlichen Endprodukten führen. Wünschenswert und von Rohstoff-Zulieferern nicht immer leicht zu erfüllen ist nicht nur eine möglichst geringe Streuung der Partikelgröße innerhalb eines Rohstoffes, sondern auch innerhalb der verschiedenen Rohstoffkomponenten. Davon abgesehen bemüht man sich durch oft stundenlanges nasses oder trockenes Mischen der Pulver in Schwing- oder Kugelmühlen, eine möglichst homogene Verteilung und Vermischung der einzelnen Komponenten zu erreichen. Dieses Ziel ist besonders bei unterschiedlichen Korngrößen nicht ganz erreichbar. Außerdem kann mit zunehmender Mischdauer eine Entmischung eintreten. Die unter anderem auch zum Ausgleich von Inhomogenität vor dem Sintern durchgeführten Hochtemperaturprozesse (Calzination) andererseits machen weitere, mit Verunreinigungen behaftete Mahlprozesse notwendig, wodurch die Endeigenschaften der Bauelemente in zufälliger Weise beeinflußt werden. Die bisher übliche, physikalisch - mechanische Aufbereitungsmethode ist auch vom verfahrenstechnischen Standpunkt nachteilig, insofern sie eine diskontinuierliche Massefertigung erzwingt.

Neuerdings sind auch verschiedene chemische Aufbereitungsmethoden bekannt geworden, insbesondere die Copräzipitation von Oxalaten (s. R.G. Dosch: The Effects of Chemical Processing on Electrical Properties of High Field ZnO Varistors, in: Science of Ceramic Chemical Processing herausgegeben von Larry L. Hench and Donald R. Ullrich, New York, (1986), S. 311-319). Unter Copräzipitation (Mitfällung) wird allgemein die Vermengung des Niederschlags einer Substanz mit Stoffen, die im Lösungsmittel enthalten waren und die beim Ausfällen in den Niederschlag eingebaut werden, verstanden. Im genannten Aufsatz geht es um die Aufbereitung einer Keramikmasse für einen ZnO-Varistor, dessen Spezifikationen einen mikrostruktruellen Aufbau größerer Homogenität und kleinerer Korngröße, als sie mit konventionellen Aufbereitungsmethoden erreichbar sind, verlangen. Dem Aufsatz zufolge werden die Chloride der meisten der gewünschten Ausgangsmetalle und Dotierungsstoffe in eine wässrige Lösung gebracht und gemeinsam als Hydroxide der Elemente Zn, CO und/oder Mn durch Zugabe von NaOH ausgefällt. Nach zweiminütigem Rühren wird, entsprechend der Molmenge der ausgefällten Metalle, Oxalsäure in wässriger Lösung zugesetzt. Die resultierenden Oxalate werden anschließend filtriert, gewaschen und durch eine Temperaturbehandlung bei 600° C zu Oxiden calziniert. Erst danach wird Wismuth zusätzlich präzipiert, indem die Oxide in eine Lösung von metallischem Wismuth in Salpetersäure gebracht werden, so daß sich Bi-Verbindungen auf die Oberfläche der Teilchen niederschlagen. Das Oxidpulver wird daraufhin filtriert, bei 400° C calziniert, in Tablettenform verpreßt und in Luft bei 675 bis 740° C gesintert.

Der geschilderte bekannte Herstellungsprozeß, bei dem die Metallsalze auch als Sulfate, Nitrate oder Acetate vorliegen können, verzichtet also auf mechanische Mahl- und Mischprozesse und erreicht durchschnittliche Korngrößen zwischen 0,5 und 0,8 $\mu$m, verglichen mit ca. 15 $\mu$m bei den konventionell

hergestellten Materialien. Der Zwischenschritt über Oxalate, die auf zwei Teilschritte aufgeteilten Fällungen und die am Beispiel eines speziellen ZnO-Veristors orientierte Prozeßführung lassen jedoch eine allgemeinere und verbesserte Ausnutzung der Methode der Copräzipitation wünschenswert erscheinen.

Aufgabe der Erfindung ist es daher, ein verfahrenstechnisch vereinfachtes, die Vorteile der Aufbereitung der Keramikmasse durch Copräzipitation möglichst weitgehend ausnutzendes Verfahren anzugeben, daß zum Herstellen von ganz unterschiedlichen, hohen Anforderungen an ihren mikrostrukturellen Aufbau genügenden, keramischen Bauelementen geeignet ist.

Zur Lösung dieser Aufgabe sieht das erfindungsgemäße Verfahren vor,

- daß zunächst alle einzelnen als Rohstoffe benötigten Massekomponenten im gewünschten Mengen- und Mischungsverhältnis in eine wässrige Lösung gebracht und dort durch Umrühren homogen dispergiert werden,
- daß anschließend alle gelösten Massekomponenten durch chemische Reaktion mit Laugen oder Laugenbildern gemeinsam als homogenes Mischhydroxid mit einer durchschnittlichen Korngröße unter 0,3 $\mu$m ausgefällt (copräzipiert) werden,
- und daß der ausgefällte Feststoff einer Nachwaschung und einer Trocknung unterzogen und anschließend nach üblichen Verfahren weiterverarbeitet, insbesondere calziniert, mit Bindemittel dispergiert, geformt, gesintert und schließlich mit Metallbelegungen versehen wird.

Vorteilhafte Weiterbildungen des erfindungsgemäßen Verfahrens bestehen darin, daß als Massekomponenten Metallsalze, vorzugsweise Nitrate, Acetate, Chloride und sonstige Halogenide gewählt und im gewünschten Mengenverhältnis in Wasser gelöst werden. Je nach zu erzielender elektrischer Eigenschaft des Endproduktes sind beliebige Kombinationen in beliebigen Konzentrationen oder Mengenverhältnissen z. B. der folgenden Elemente denkbar:

Al, Sb, Ba, Pb, B, Cd, Ca, Ce, Cr, Fe, Er, Hf, Ho, Co, Cu, La, Mg, Mn, Nd, Ni, Nb, Pr, Sm, Sc, Si, Sr, Ta, Ti, V, Bi, Y, Zn, Sn, Zr.

Die erfindungsgemäße Herstellung mittels Copräzipitation hat ganz allgemein den Vorteil, daß die alle gemeinsam in einer wässrigen Lösung vorliegenden Massekomponenten, also auch die Dotationsstoffe, durch einfaches Umrühren im molekularen bzw. ionogenen Bereich sehr homogen dispergiert werden können. Durch Ausfällung nach chemischen Reaktionen mit Laugen oder Laugebildern resultiert nach geeigneter Prozeßführung ein in Wasser nur schwer -oder unlöslicher Feststoff. In diesem bleibt einerseits durch Mischhydroxidbildung die verbesserte homogene Verteilung der Einzelkomponenten gewahrt und andererseits weist der Feststoff eine äußerst geringe durchschnittliche Korngröße unter 0,3 $\mu$m auf. Die Verbesserung der Homogenität macht sich sowohl durch eine gleichmäßigere Verteilung der verschiedenen Dotierelemente wie auch durch eine Verminderung der Konzentration von Gefügedefekten wie Poren oder Agglomerate positiv bemerkbar.

Nach einer weiteren vorteilhaften Weiterbildung des erfindungsgemäßen Verfahrens kann das gewaschene und getrocknete Pulver anschließend geformt und daraufhin direkt zu dichten Keramikkörpern gesintert werden, wobei die Sintertemperatur um etwa 200 bis 400° C niedriger als bei durch mechanisches Mischen aufbereitetem Pulver gewählt wird. Dies ist möglich, da durch das feinteilige Ausgangskorn eine hohe Sinterreaktivität der keramischen Masse gegeben ist. Die niedrigere und bis zu einem gewissen Grad wählbare Sintertemperatur ist nicht nur aus Energieersparnisgründen vorteilhaft, sondern auch im Hinblick auf das Erzielen einer gesinterten Keramik mit definierter polykristalliner Struktur (z. B. Spinell oder Perowskit). Eine derartig definierte keramische Matrix stellt sich gewöhnlich nur innerhalb eines bestimmten Temperaturbereiches ein, der oft niedriger liegt als die bei konventionellen Korngrößen im $\mu$m-Bereich erforderliche Sintertemperatur.

Falls vor dem eigentlichen Sinterprozeß eine zusätzliche Temperaturbehandlung notwendig ist, so kann diese bei Temperaturen, die um 500 bis 600° C niedriger liegen als bei durch mechanisches Mischen aufbereitetem Pulver, durchgeführt werden. Die resultierenden Korngrößen liegen typischerweise immer noch im Submikrometerbereich. Das nach dem Vorbrand gewonnene Pulver kann dann beispielsweise im Zuge einer Schlickeraufbereitung durch Zusatz eines Bindemittels dispergiert und nach anschließender Sprühgranulation konventionell weiterverarbeitet werden.

Zur Veranschaulichung des erfindungsgemäßen Verfahrens in den folgenden Ausführungsbeispielen, in denen Vorteile und Einzelheiten des Verfahrens beschrieben werden, zeigt die FIG schematisch eine Vorrichtung zur Durchführung des Verfahrens. Die in der FIG gezeigten Behälter und Reaktoren können aus Glas oder Kunststoff gefertigt sein.

Copräzipitation einer ZnO-Varistor-Keramikmasse

In einem ersten Vorlagebehälter T1 werden in 9.5 l destilliertem, schwach saurem Wasser folgende Massekomponenten gelöst:

| | |
|---|---|
| 137.82 g | $ZnCl_2$ |
| 1.30 g | $MnCl_2 . 2H_2O$ |
| 1.14 g | $CoCl_2 . 6H_2O$ |
| 1.13 g | $NiCl_2 . 6H_2O$ |
| 0.5212 g | $CrCl_3 . 6H_2O$ |
| 0.0090 g | $BaCl_2$ |
| 0.0050 g | $AlCl_3 . 6H_2O$ |

In einem zweiten Vorlagebehälter T2 werden in 0.5 l stärker saurem $H_2O$ gelöst:

6.50 g $BiCl_3$ und 4.32 g $SbCl_3$

Diese Lösungen werden über die Pumpen P1 und P2 mit konstanter Förderleistung in ein erstes, thermostatisierbares Reaktionsgefäß G1 überführt. Gleichzeitig ist mit der Pumpe P3 soviel 0.5 n Lauge ($NaOH$, $NH_4OH$, HMTA o.ä.) aus einen dritten Vorlagebehälter T3 in das Gefäß G1 zu pumpen, daß der Fällungs-pH in G1 den gewünschten Wert, der vorteilhafterweise bei pH = 8.2 ± 0.2 liegt, nicht überschreitet. Während der gesamten Reaktionszeit wird mittels eines Motors M1 gerührt und über eine Pumpe P soviel aus G1 abgesaugt, daß immer ein gleicher Füllstand gegeben ist. Je nach Fällungsmengen kann der Masseschlicker nun mittels Pumpen P4 und P6 in die Gefäße G2 oder G3 gepumpt werden, wo einerseits eine Nachkorrektur des ph-Wertes erfolgen kann, oder der Massenschlicker andererseits, zur besseren fest-flüssig Separation, auf eine Temperatur von 70 - 100° C gebracht werden kann, wodurch eine bessere Sedimentierbarkeit der Hydroxide gegeben ist.

Schlußendlich wird das Produkt in das Gefäß G4 überführt, wo durch Sedimentation eine Abtrennung vom Prozeßwasser erfolgt, und das Produkt so lange mit frischem $H_2O$ versetzt wird, bis ein $Cl^-$-Nachweis mit $AgNo_3$ negativ ist. Dabei wird auch im Prozeßwasser befindliches NaCl, das sich später möglicherweise störend auswirken könnte, auf überraschend einfache Weise mit entfernt. Die nachfolgende Trocknung des Sediments erfolgt z. B. bei 120° C im Trockenschrank.

Danach werden aus dem Pulver auf konventionelle Weise, nach Granulation mit Polyvinylalkohol, auf Pressen Testkörper gefertigt und bei Temperaturen unter 1300° C, vorzugsweise zwischen 950° und 1200°, gesintert. Die mittlere Dichte der Testkörper betrug 5.4. g/cm³ oder 91.5 % der theoretischen Dichte. Der Prozeßablauf bei diesem und den folgenden Ausführungsbeispielen zeichnet sich durch besonders einfache aber genaue Möglichkeiten der Kontrolle und der Variation der chemischen Zusammensetzungen aus. Nur letztere und der Fällungs-pH müssen entsprechend den verschiedenen Keramikmassen (Varistor, Thermistor, Kondensator) modifiziert werden, um mit der gleichen Anlage die verschiedenartigen Bauelemente herstellen zu können.

Copräcipitation einer NTC-Thermistor-Keramikmasse

Im Vorlagebehälter T1 werden 10 l einer Lösung von :

324,0 g $MnCl_2 . 2H_2O$ und
129,6 g $CoCl_2$

in destilliertem Wasser hergestellt.

Diese Lösung wird über die Pumpe P1 mit konstanter Förderleistung in das erste Reaktionsgefäß G1 überführt. Aus dem dritten Vorlagebehälter T3 wird gleichzeitig soviel 0,5 n Lauge (NaOH etc.) in das Gefäß G1 gepumpt, daß der Fällungs-pH einen Wert von 10,2 ± 0,2 nicht überschreitet.

Während der gesamten Reaktionszeit wird mittels eines Motors M1 gerührt und über eine Pumpe soviel in das Gefäß G3 überführt, daß immer ein gleicher Füllstand im Gefäß G1 gegeben ist.

Im Gefäß G3 wird nun, unter Rühren, die kolloidale Suspension auf eine Temperatur von 70 - 90°C gebracht und gleichzeitig überschüssig Luft eingeblasen, wobei die Farbe der Suspension von violett auf schwarz umschlägt. Bei dieser hydrothermalen Autoxidation wandeln sich die Hydroxide selbst um in Oxide in Spinellform. Schlußendlich wird das Produkt in das Gefäß G4 überführt, das Prozeßwasser abgezogen und das Produkt solange mit frischem $H_2O$ versetzt, bis ein Cl-Nachweis mit $AgNO_3$ nur mehr schwach positiv bzw. negativ ist. Die weitere Verarbeitung des Produktes erfolgte analog zum ersten Ausführungsbeispiel.

Copräcipitation einer Vielschichtkondensator-Keramikmasse

Im Vorlagebehälter T1 werden in 10 l stärker HCl-saurem Wasser gelöst:

| | |
|---|---|
| 863,5 g | $TiOCl_2$ |
| 551,6 g | $BaCl_2 . xH_2O$ |
| 21,1 g | $NbCl_5$ |
| 11,0 g | $CoCl_2 . 2H_2O$ |
| 0,2 g | $CuCl_2 . 2H_2O$ |

Diese Lösung wird über die Pumpe P1 mit konstanten Fördermengen in das Reaktionsgefäß G1 überführt und gleichzeitig aus dem Gefäß T3 soviel 1 n Lauge (NaOH, KOH, etc) zudosiert, daß während der gesamten Reaktionszeit ein Fällungs-pH von 13,5 ± 0,5 nicht überschritten wird.

Während der gesamten Reaktionsdauer wird kräftig gerührt und über eine Pumpe soviel in eine Kammerzentrifuge überführt, daß im Gefäß G1 stets ein gleicher Füllstand gegeben ist.

Durch die Zentrifugation wird das Produkt vom Prozeßwasser abgetrennt, konventionell getrocknet und bei 600 bis 800°C calziniert. Das calzinierte Pulver kann nunmehr $Cl^-$-frei gewaschen und - analog Ausführungsbeispiel 1 - weiterverarbeitet werden.

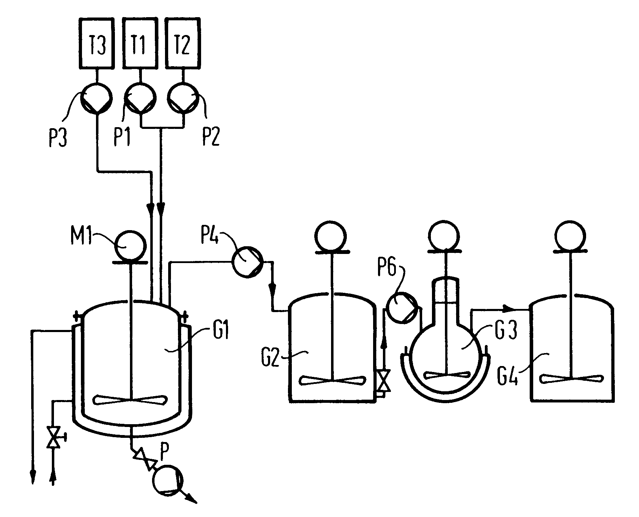

**Patentansprüche**

1. Verfahren zum Herstellen von elektrischen keramischen Bauelementen aus hochdisperser, mittels Copräzipitation aufbereiteter Keramikmasse,
   **dadurch gekennzeichnet,**
   - daß zunächst alle einzelnen als Rohstoffe benötigten Massekomponenten im gewünschten Mengen- und Mischungsverhältnis in eine wässrige Lösung gebracht und dort durch Umrühren homogen dispergiert werden,
   - daß anschließend alle gelösten Massekomponenten durch chemische Reaktion mit Laugen oder Laugenbildern gemeinsam als homogenes Mischhydroxid mit einer durchschnittlichen Korngröße unter 0,3 $\mu$m ausgefällt (copräzipiert) werden,
   - und daß der ausgefällte Feststoff einer Nachwaschung und einer Trocknung unterzogen und anschließend nach üblichen Verfahren weiterverarbeitet, insbesondere calziniert, mit Bindemittel dispergiert, geformt, gesintert und schließlich mit Metallbelegungen versehen wird.

2. Verfahren nach Anspruch 1,
   **dadurch gekennzeichnet,**
   daß die als gewaschenes und getrocknetes Pulver vorliegende Keramikmasse anschließend geformt und daraufhin direkt zu dichten Keramikkörpern gesintert wird, wobei die Sintertemperatur um etwa 200 bis 400° C niedriger als bei durch mechanisches Mischen aufbereiteter Keramikmasse gewählt wird.

3. Verfahren nach Anspruch 1 oder 2,
   **dadurch gekennzeichnet,**
   daß als Massekomponenten Metallsalze, insbesondere Halogenide in Wasser gelöst und vermischt werden.

4. Verfahren nach Anspruch 3,
   **dadurch gekennzeichnet,**
   daß als Metallsalze Nitrate in Wasser gelöst und vermischt werden.

5. Verfahren nach Anspruch 3,
   **dadurch gekennzeichnet,**
   daß als Metallsalze Acetate in Wasser gelöst und vermischt werden.